# EUROPÄISCHE PATENTSCHRIFT

(11) **EP 2 695 013 B1**
(45) Veröffentlichungstag und Bekanntmachung des Hinweises auf die Patenterteilung: **06.01.2021**
(21) Anmeldenummer: 12707074.6
(22) Anmeldetag: 27.02.2012
(51) Int. Cl.: G02B 7/00, G02B 21/14

(54) **SCHIEBER ZUM EINSCHIEBEN IN DEN BEOBACHTUNGSSTRAHLENGANG EINES MIKROSKOPS**
SLIDER FOR SLIDING INTO THE OBSERVATION BEAM PATH OF A MICROSCOPE
PLATINE À INSÉRER DANS LE TRAJET D'OBSERVATION D'UN MICROSCOPE

(30) Priorität: 01.04.2011 DE 102011006667
(43) Veröffentlichungstag der Anmeldung: 12.02.2014
(73) Patentinhaber: Carl Zeiss Microscopy GmbH, 07745 Jena (DE)
(72) Erfinder: SCHAFFER, Joerg, 37085 Goettingen (DE); SCHNUELL, Peter, 37130 Gleichen (DE)
(74) Vertreter: Gleim Petri Oehmke Patent- und Rechtsanwaltspartnerschaft mbB
(86) Internationale Anmeldenummer: PCT/EP2012/053240
(87) Internationale Veröffentlichungsnummer: WO 2012/130542

(56) Entgegenhaltungen:
- DE-A1-102004 061 901
- DE-A1-102006 024 109
- JP-A- 2001 091 835
- Rainer Danz ET AL: "PlasDIC - eine nützliche Modifikation des differentiellen Interferenzkontrastes nach Smith/Nomarski in Durchlicht-Anordnung", Photonik, 1. Januar 2004 (2004-01-01), Seiten 42-42, XP55025997, Inet Gefunden im Internet: URL:http://www.zeiss.com.sg/C12567BE00472A 5C/EmbedTitelIntern/Article-PlasDic_Photon ic_d/$File/PlasDIC_Photonik_2004_01_42.pdf [gefunden am 2012-05-02] in der Anmeldung erwähnt
- SHALIN B. MEHTA ET AL: "Partially coherent image formation in differential interference contrast (DIC) microscope", OPTICS EXPRESS, Bd. 16, Nr. 24, 24. November 2008 (2008-11-24), Seite 19462, XP55026010, ISSN: 1094-4087, DOI: 10.1364/OE.16.019462

## Beschreibung

### Gebiet der Erfindung

Die Erfindung betrifft einen Schieber zum Einschieben in den Beobachtungsstrahlengang eines Mikroskops. Ein solcher Schieber umfasst eine erste Halterung, in der ein Stapel optischer Elemente für ein erstes Beobachtungsverfahren, nämlich ein polarisationsoptisches, differentielles Interferenzkontrastverfahren angeordnet ist. Der Stapel optischer Elemente umfasst einen Polarisator und polarisationsoptische Shearing-Elemente, beispielsweise in Form eines - aus mehreren einzelnen Prismen zusammengesetztes - Wollaston- oder modifizierten Wollastonprismas, insbesondere in Form eines Nomarskiprismas.

### Stand der Technik

Mikroskopisch zu untersuchende Objekte, insbesondere biologische Objekte lassen sich im wesentlichen in zwei Klassen einteilen, nämlich in Amplitudenobjekte und Phasenobjekte. Bei der mikroskopischen Untersuchung von Amplitudenobjekten verändern diese das Licht, welches zu ihrer Beleuchtung verwendet wird, in seiner Helligkeit bzw. Intensität, oder auch in der Wellenlänge, wenn beispielsweise Farbstoffe zur Emission angeregt werden. Amplitudenobjekte können auf diese Weise direkt sichtbar gemacht werden. Phasenobjekte hingegen ändern lediglich die Phasenlage des Lichtes, beispielsweise durch Abweichungen in der Brechzahl oder der Dicke relativ zur Umgebung, so dass eine direkte Wahrnehmung auch durch elektronische Bildsensoren nicht möglich ist. Allerdings können Phasenobjekte auch mit Fluoreszenzmarkern markiert sein, so dass sie auf diese Weise direkt sichtbar gemacht werden.

Um unmarkierte Phasenobjekte sichtbar zu machen, wurden verschiedene mikroskopische Verfahren entwickelt, nämlich Phasenkontrast- und Interferenzkontrastverfahren.

Eines der am häufigsten eingesetzten Interferenzkontrastverfahren ist das Differential-Interferenzkontrastverfahren (DIC) nach Smith und Nomarski. Dabei wird jeweils ein sogenanntes Nomarski-Prisma, bei dem es sich um eine Modifikation eines Wollastonprismas handelt, beleuchtungsseitig in der Kondensor-Brennebene und abbildungsseitig in der hinteren Objektiv-Brennebene in den Strahlengang eines Mikroskops eingebracht. In den Strahlengang vor dem ersten Nomarskiprisma wird ein Polarisator zur Erzeugung linear polarisierten Lichtes eingebracht. Nach dem Durchgang durch das zweite Nomarskiprisma wird das Licht mit Hilfe eines zweiten Polarisators, des Analysators, analysiert. Durch das beleuchtungsseitige Nomarskiprisma wird das Licht unabhängig vom Objekt in zwei kohärente Teilwellen aufgespalten, die beide vom Objekt beeinflusst werden. Durch das zweite Prisma werden die Teilstrahlen zusammengeführt und können hinter dem Analysator miteinander interferieren. Die Durchlassrichtungen von Polarisator und Analysator stehen senkrecht aufeinander. Nachteilig bei diesem Aufbau ist, dass sowohl das Objektiv als auch alle optischen Elemente im Beleuchtungsstrahlengang hinsichtlich der Polarisation isotropen Charakter aufweisen müssen, so dass keine doppelbrechenden Objektträger aus Kunststoff oder Objektive mit merklicher Spannungsdoppelbrechung verwendet werden können.

Eine Weiterentwicklung dieses Verfahrens ist das sogenannte PlasDIC-Verfahren, welches beispielsweise in der EP 1 359 453 B1 und in einem Artikel von R. Danz et al. in der Zeitschrift "Photonik", Ausgabe 1 / 2004 auf den Seiten 42-45 beschrieben ist. Auf beide Dokumente wird hinsichtlich der Beschreibung des PlasDIC-Verfahrens ausdrücklich Bezug genommen. Im Unterschied zum normalen DIC-Verfahren wird beim PlasDIC-Verfahren das linear polarisierte Licht erst unmittelbar vor dem abbildungsseitigen Nomarskiprisma erzeugt, wobei anstelle eines beleuchtungsseitigen Prismas eine Spaltblende eingesetzt wird. Die Breite des Spaltes ist für ein optimales Signal so zu wählen, dass der wirksame Pupillen-Gang-Unterschied in Richtung der Spaltbreite kleiner oder gleich einer Viertel-Wellenlänge bzw. einem Viertel des Interferenzstreifenabstandes in der Pupille ist.

Diese Art der Probenkontrastierung in der Bildgebung wird häufig kombiniert mit anderen Arten der Kontrastierung, beispielsweise mit einer Fluoreszenz-Kontrastierung. Um beispielsweise zwischen PlasDIC-Verfahren und einem Fluoreszenz-Kontrastverfahren zu wechseln, müssen mehrere Schritte unternommen werden: zunächst müssen Polarisator und Analysator aus dem Strahlengang genommen werden, um die auf den Detektor fallende Fluoreszenz nicht abzuschwächen. Um Doppelbilder zu vermeiden, müssen außerdem die interferometrisch wirkenden Komponenten, also beispielsweise das Wollaston- oder Nomarskiprisma, aus dem Strahlengang entfernt werden. Unter Umständen kann auch ein Objektivwechsel erforderlich sein. In Abhängigkeit von den verwendeten Fluoreszenzfarbstoffen müssen spezielle Anregungs- und Emissionsfilter in den Strahlengang eingebracht werden. Schließlich muss von einer Durchlichtbeleuchtung, wie sie im PlasDIC-Verfahren verwendet wird, auf Fluoreszenz-Auflichtbeleuchtung gewechselt werden.

In motorischen Mikroskopen des obersten Preissegments kann dieser Wechsel der Komponenten automatisiert erfolgen. Bei Mikroskopen des mittleren bis unteren Preissegments - ein Beispiel ist das Axiovert 40 der Firma Carl Zeiss Microlmaging GmbH - wird auf die Motorisierung verzichtet, die meisten Wechselvorgänge müssen per Hand durchgeführt werden, was Zeit kostet und fehlerbehaftet ist.

Die wesentlichen Komponenten für das PlasDIC-Verfahren sind Polarisator, Shearing-Elemente und Analysator. Der Analysator ist in der Regel in einem Filterrevolver oder Filterschieber angeordnet, der auch die Fluoreszenz-Emissionsfilter enthält und beim Wechsel der Beobachtungsverfahren mit diesen den aktiven Platz im Beobachtungsstrahlengang tauscht. Polarisator und Shearing-Elemente sind miteinander verkittet und werden als sogenanntes PlasDIC-Prisma zu einer Reihe von Objektiven angeboten. Da zum einen die Pupillenebene des Objektivs und die Interferenzebene des PlasDIC-Prismas zur Deckung gebracht werden müssen und deshalb beim Design des Prismas entsprechende Fertigungsparameter eingestellt werden müssen, und zum anderen die durch die Shearing-Elemente bewirkte Aufspaltung zur Brennweite des verwendeten Objektivs passen muss, ist ein solches PlasDIC-Prisma immer nur für eine begrenzte Zahl an Objektiven nutzbar.

Aus diesem Grund werden die gängigen PlasDIC-Prismen im Beobachtungsstrahlengang direkt hinter dem Objektiv in den Strahlengang eingebracht. Bei der Verwendung von Objektivrevolvern für mehrere Objektive verfügen die Revolver über eine Aufnahme, die es ermöglicht, die Prismen direkt unterhalb der Objektiv-Anlagefläche in den Objektivrevolverteller einzusetzen. Sie bewegen sich dann im Objektivrevolverteller mit dem zugeordneten Objektiv mit. Die PlasDIC-Prismen sind dazu in der Regel in speziellen Schiebern angeordnet, wie sie beispielsweise auch in dem oben bereits erwähnten Artikel von R. Danz *et al.* beschrieben sind.

In einigen Fällen kann ein PlasDIC-Prisma auch für mehrere Objektive verwendet werden. In diesem Fall kann das PlasDIC-Prisma auch in einer Ebene außerhalb des Objektivrevolvertellers positioniert werden, so dass es nicht mitbewegt wird, sobald ein Objektivwechsel erfolgt.

Während der Wechsel zwischen den verschiedenen Beobachtungsverfahren bei motorisierten Mikroskopen automatisch erfolgt, werden bei zumindest teilmotorisierten Mikroskopen Filterrevolver, Objektivrevolver und / oder der Fokustrieb motorisch betrieben und automatisch über einen PC-Anschluss sowie entsprechende Programme bewegt. Das PlasDIC-Prisma - oder auch beim DIC-Verfahren das abbildungsseitige Normaskiprisma - muss jedoch auch im Falle einer Teilmotorisierung des Mikroskops manuell entfernt werden. Insbesondere bei Nutzung des PlasDIC-Verfahrens führt der verkittete Polarisator zu einer reduzierten Transmission von etwa 25% bei Verwendung eine Polymer-basierten Polarisators. Wird dieser Polarisator nicht entfernt, könnten Bediener die beobachtete verminderte Fluoreszenzintensität auf eine generelle Schwäche des Mikroskops zurückführen.

### Beschreibung der Erfindung

Aufgabe der Erfindung ist es daher, einen Schieber der eingangs beschriebenen Art, der für die Durchführung des PlasDIC-Verfahrens geeignet ist, sowie ein entsprechendes Mikroskop dahingehend weiterzuentwickeln, dass die Anzahl der notwendigen Schritte zum Wechsel zwischen den verschiedenen Beobachtungsverfahren bei manuellen oder teilmotorisierten Mikroskopen reduziert wird. Auch die Anzahl der zu bewegenden Komponenten soll reduziert werden, sowie die Möglichkeit einer Fehlbedienung durch den Benutzer.

Diese Aufgabe wird bei einem Schieber der eingangs beschriebenen Art dadurch gelöst, dass der Stapel optischer Elemente in der ersten Halterung einen Analysator umfasst, der im Stapel in bezug auf seine Polarisationsrichtung in einer fest vorgegebenen Orientierung hinsichtlich der Polarisationsrichtung des Polarisators angeordnet ist, wobei der Stapel optischer Elemente in der ersten Halterung auswechselbar angeordnet ist und der Schieber mindestens eine weitere Halterung zur Aufnahme optischer Elemente für mindestens ein weiteres Beobachtungsverfahren umfasst.

Dadurch, dass das Paar aus Polarisator und Analysator fest zueinander steht, bleibt die Orientierung der Shearing-Elemente, also beispielsweise des Nomarskiprismas, relativ zu den Polarisationsrichtungen und damit zu den Durchlassrichtungen der beiden polarisierenden Elemente gleich. Beim Wechsel zwischen zwei Verfahren muss hier also keine Ausrichtung bzw. Justierung vorgenommen werden, einzig die kondensorseitige Spaltblende, die die λ/4-Bedingung erfüllt, muss in den Strahlengang eingebracht werden, was jedoch zum Beispiel bei einem Wechsel zwischen Fluoreszenz-Auflichtbeleuchtung einerseits und PlasDIC-Durchlichtbeleuchtung andererseits aufgrund des Wechsels der Beleuchtungsrichtung keiner Aktion bedarf. Die Durchlassrichtungen von Polarisator und Analysator können dabei beliebig zueinander festgelegt werden, vorzugsweise stehen sie jedoch gekreuzt zueinander im Winkel von 90° und gemeinsam unter 45° zur Aufspaltungsrichtung des Nomarskiprismas. Diese Orientierung gewährleistet den maximalen Kontrast.

Die feste Orientierung der Durchlassrichtungen und Aufspaltungsrichtung zueinander ermöglicht es auch, die Richtung, in die der Schieber in das Mikroskop eingeschoben wird, und damit auch die Lage einer entsprechenden Schieberaufnahme im Mikroskop flexibler und prinzipiell beliebig zu wählen, was den Spielraum in bezug auf die Konstruktion erhöht. Über die Bewegung des Schiebers in Schieberichtung lässt sich die Kontrastierung über eine Gangunterschiedsbeeinflussung, bei der das Prisma senkrecht zur optischen Achse dezentriert wird, variieren. Bei Mikroskopen, wie sie im Stand der Technik zu finden sind, war dies bisher aufgrund der Trennung von Analysator einerseits, sowie Polarisator und Prisma andererseits nicht möglich.

Der Stapel optischer Elemente ist in der ersten Halterung auswechselbar angeordnet, was es einerseits ermöglicht, PlasDIC-Stapel für verschiedene Objektivgruppen in den Schieber einzusetzen, andererseits aber auch die Möglichkeit schafft, mit entsprechenden Fassungen die PlasDIC-Stapel in verschiedenen Winkeln in den Schieber einzusetzen.

Um schließlich das Umschalten auf ein anderes Beobachtungsverfahren zu ermöglichen, umfasst der Schieber mindestens eine weitere Halterung zur Aufnahme optischer Elmente für mindestens ein weiteres Beobachtungsverfahren. In eine zweite Halterung können beispielsweise ein Filter für die Fluoreszenzemission eingebracht werden, die Halterung kann auch frei bleiben, um eine Hellfeldbeleuchtung bei freiem Durchgang zu ermöglichen. Bei dem weiteren Beobachtungsverfahren kann es sich aber auch um ein übliches DIC-Verfahren beispielsweise nach Smith/Normaski handeln, oder aber auch um ein PlasDIC-Verfahren, welches mit anderen Parametern arbeitet, beispielsweise anderen Shearing-Elementen, anderen Polarisatoren / Analysatoren, wobei der Unterschied auch einfach nur in einer anderen Stellung der Durchlassrichtungen von Polarisator und Analysator liegen kann, oder in einem anderen Kippwinkel in bezug auf die optische Achse. Auch Variationen des PlasDIC-Verfahrens werden also unter dem Begriff "weiteres Beobachtungsverfahren" subsummiert. Selbstverständlich ist es auch möglich, den Schieber mit mehr als zwei Halterungen auszugestalten, sofern dies konstruktionstechnisch in bezug auf das Mikroskop, in das der Schieber eingesetzt werden soll, möglich ist. In der dritten Halterung können dann optische Elemente für ein drittes Beobachtungsverfahren angeordnet sein, beispielsweise ein Polarisator für eine Durchlicht-Beobachtung mit Polarisationskontrast.

Mittels des erfindungsgemäßen Schiebers wird das Umschalten zwischen zwei verschiedenen Kontrastierungsverfahren, insbesondere zwischen einem PlasDIC-Verfahren und einem Fluoreszenzkontrastverfahren oder anderen Kontrastverfahren, die keine Polarisation benötigen, für den Bediener erleichtert, indem mit einer Handbewegung sowohl die Shearing-Elemente als auch beide polarisationsoptischen Elemente aus dem Strahlengang entfernt werden. Der Benutzer kann also nicht versehentlich vergessen, den Analysator und / oder den PlasDIC-Schieber ebenfalls aus dem Strahlengang zu entfernen, da dieser gleichzeitig mit den anderen Elementen entfernt wird. Der Stapel optischer Elemente kann auch problemlos gegen einen anderen Stapel ausgetauscht werden, der beispielsweise für eine andere Gruppe von Objektiven optimiert ist.

Vorzugsweise sind die optischen Elemente des Stapels miteinander verkittet. Dies ermöglicht zum einen ein einfaches Auswechseln des Stapels gegen einen anderen und sorgt zum anderen zusätzlich dafür, dass die optische Wirkung sowie die Stellung der Durchlassrichtungen von Analysator und Polarisator permanent fixiert sind, da eine Verschiebung der einzelnen Elemente gegeneinander nicht möglich ist. Andererseits ist es auch möglich, die optischen Elemente jeweils einzeln oder in Gruppen zu fassen und dann die optischen Elemente in ihren Fassungen in einen entsprechend ausgestalteten Schieber einzusetzen. Dies ermöglicht beispielsweise ein Auswechseln der Shearing-Elemente unabhängig von Polarisator und Analysator oder auch die Verwendung anderer Polarisatoren und Analysatoren mit denselben Shearing-Elementen.

Die Shearing-Elemente können beispielsweise zwei Keilprismen umfassen, die miteinander verkittet sind und bevorzugt ein Nomarskiprisma oder Wollastonprisma bilden. Es können jedoch auch mehr als zwei Prismen verwendet werden.

Polarisator und Analysator bestehen bevorzugt jeweils aus einer Polyvinylalkohol-Folie (PVA-Folie). Auch die Verwendung von Polarisatoren und Analysatoren aus anderen Materialien, wie beispielsweise auf Basis von mit Metallpartikeln durchsetzten Gläsern oder Polarisatoren auf der Basis von Metallstreifengittern, sogenannten *wire-grid-*Polarisatoren ist möglich. Für den Fall, dass die Polare, d.h. Polarisator und Analysator, aus PVA-Folie bestehen, sind sie bevorzugt jeweils auf der den Shearing-Elementen abgewandten Seite mit einem Deckglas verkittet, welches die Polare vor Beschädigungen schützt. Bei der Verwendung anderer Materialien kann auf ein solches Deckglas gegebenenfalls auch verzichtet werden. Mit ihrer den Shearing-Elementen zugewandten Seite können die Polare auch mit diesem verkittet sein.

Die erste Halterung, in die der Stapel optischer Elemente eingesetzt wird, ist bevorzugt als Einschubhalterung für einen Einschub ausgestaltet. In diesem Einschub werden die optischen Elemente des Stapels - bei verkitteten Elementen der Stapel selbst - gehalten, er dient als Fassung. Der Einschub kann dann in die Einschubhalterung eingeschoben werden, in der Regel entlang der Längsachse des Schiebers, die der Schubrichtung des eingesetzten Schiebers im Mikroskop entspricht.

Der Stapel optischer Elemente ist dabei zu einem in die Einschubhalterung einzusetzenden Einschub zusammengefasst. Mit der Verwendung von Einschüben ist es möglich, beispielsweise verschiedene Kippungen des Stapels optischer Elemente zu realisieren, so dass die Kontrastierrichtung variiert werden kann. Zur Drehung des Stapels optischer Elemente für die Variation der Kontrastierrichtung wird der Stapel optischer Elemente einfach in einem anderen Einschub eingesetzt, mit dem eine andere Kippung realisiert wird, oder der Einschub wird gegen einen anderen ausgetauscht, falls die optischen Elemente beispielsweise durch Verklebung mit dem Einschub fest verbunden sind.

Der Einschub ist dabei zweckmäßig mit einer Rändelschraube zur lateralen Verschiebung des Stapels optischer Elemente im Einschub ausgestattet. Damit lässt sich der Gangunterschied unabhängig von der Probe variieren. Der Einschub selbst kann im Schieber kraft- oder formschlüssig fixiert werden, beispielsweise mittels magnetischer Halterungen oder Schrauben.

Die Erfindung betrifft auch ein Mikroskop mit einem erfindungsgemäßen Schieber, wie er vorangehend beschrieben wurde. Ein solches Mikroskop umfasst unter anderem einen Objektivrevolver mit mehreren Objektiven und eine Schieberaufnahme. In diese ist der Schieber auswechselbar und verschiebbar eingesetzt. Die Schieberaufnahme ist im Beobachtungsstrahlengang zwischen dem Objektivrevolver und einem Okulartubus starr angeordnet. Waren bisher entsprechende Schieber mit Stapeln optischer Elemente für das PlasDIC-Verfahren in den Objektivrevolver selbst einzusetzen, so ist die erfindungsgemäße Positionierung der Schieberaufnahme unabhängig vom Objektivrevolver und auch unabhängig von einem Filterrevolver oder Filterschieber, so dass ein Stapel optischer Elemente für das PlasDIC-Verfahren auch für mehrere Objektive genutzt werden kann. Außerdem wird bei der Beobachtung grundsätzlich auch eine gleichzeitige Aufnahme eines Fluoreszenzkontrast- und eines PlasDIC-Bildes ermöglicht, da die entsprechende Filterposition im Filterrevolver bzw. Filterschieber nicht durch den Analysator blockiert ist.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig.1a: eine Draufsicht auf einen Schieber,
- Fig.1b: die Seitenansicht des Schiebers,
- Fig.2: einen Schnitt durch einen Schieber und
- Fig. 3: skizzenhaft ein inverses Mikroskop mit einer Schieberaufnahme.

### Ausführliche Beschreibung der Zeichnungen

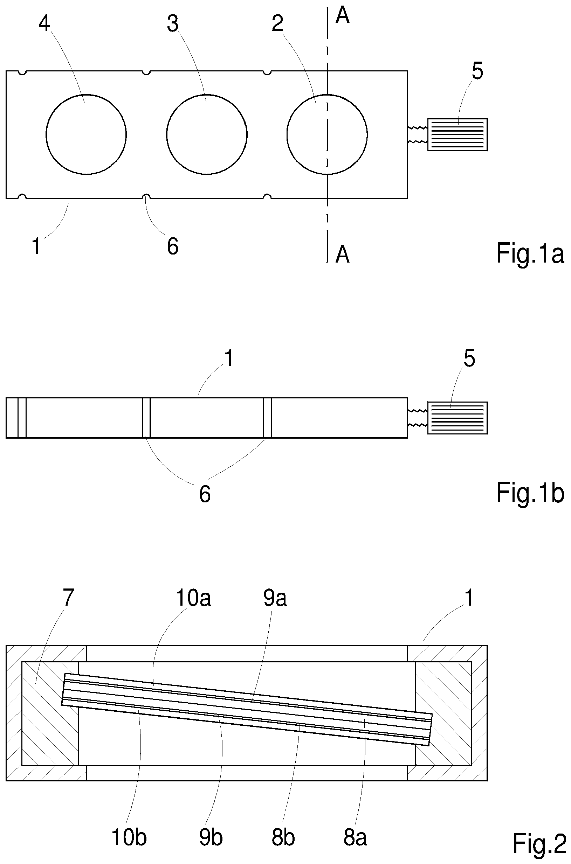

In Fig.1 ist in einer Draufsicht ein Schieber 1 zum Einschieben in den Beobachtungsstrahlengang eines Mikroskops dargestellt. Dieser Schieber umfasst eine erste Halterung 2. In der ersten Halterung 2 ist ein Stapel optischer Elemente für ein erstes Beobachtungsverfahren, das PlasDIC-Verfahren, angeordnet. Der Stapel optischer Elemente in der ersten Halterung 2 umfasst einen Polarisator, polarisationsoptische Shearing-Elemente und einen Analysator. Der Analysator ist im Stapel in bezug auf seine Polarisationsrichtung in einer fest vorgegebenen Orientierung in bezug auf die Polarisationsrichtung des Polarisators angeordnet. Die Durchlassrichtungen der beiden Polare sind also zueinander fixiert.

Der Schieber 1 umfasst mindestens eine weitere Halterung für Aufnahme optischer Elemente für mindestens ein weiteres Beobachtungsverfahren. In dem in Fig.1a gezeigten Beispiel umfasst der Schieber 1 zwei weitere Halterungen, nämlich eine zweite Halterung 3 und eine dritte Halterung 4. In der zweiten Halterung 3 können beispielsweise optische Elemente für eine Hellfeld-Beobachtung angeordnet sein. Auch die Anordnung eines Filters oder mehrerer Filter in der zweiten Halterung 3 ist eine Möglichkeit. Beispielsweise kann dort ein Fluoreszenz-Emissionsfilter angeordnet sein, der in einem Fluoreszenzkontrast-Beobachtungsverfahren verwendet werden kann. Dabei ist es nicht zwingend notwendig, dass in der zweiten Halterung 3 überhaupt ein optisches Element angeordnet ist. Auf ein solches kann beispielsweise verzichtet werden, wenn als zweites Beobachtungsverfahren eine einfache Durchlicht-Beobachtung durchgeführt werden soll. In der dritten Halterung 4 kann ein Polarisator für eine Durchlicht-Beobachtung mit Polarisationskontrast angeordnet sein, oder auch für ein übliches differentielles Interferenzkontrastverfahren nach Smith / Nomarski. Die genannte Aufzählung verschiedener Beobachtungsverfahren ist nur beispielhaft zu verstehen, es gibt eine Vielzahl weiterer Beobachtungsverfahren, für die in den Halterungen 3 und 4 optische Elemente angeordnet sein können. Auch die Anordnung eines weiteren Stapels optischer Elemente für das PlasDIC-Verfahren ist selbstverständlich möglich, beispielsweise mit Polarisatoren / Analysatoren aus anderen Materialien, oder anderen Shearing-Elementen.

Vorzugsweise wird man für die Variationen des PlasDIC-Beobachtungsverfahrens jedoch die Halterung 2 benutzen, da diese ein einfaches Auswechseln der optischen Elemente erlaubt. Die erste Halterung 2 ist dazu bevorzugt als Einschubhalterung ausgestaltet, der Stapel optischer Elemente ist zu einem in die Einschubhalterung einzusetzenden Einschub 7 zusammengefasst. Der Stapel optischer Elemente ist nach dem Einsetzen mit einer Rändelschraube 5 im Einschub 7 lateral verschiebbar. An den in Fig.1b dargestellten Seitenflächen des Schiebers sind Nuten 6 angebracht, die in entsprechende, federnde Nasen in einer Schieberaufnahme im Mikroskop eingreifen und Rastpositionen definieren, an denen die Öffnungen der Halterungen 2, 3 und 4 jeweils im Beobachtungsstrahlengang des Mikroskops zentriert sind.

In Fig.2 ist der Schieber 1 im Querschnitt entlang einer Linie AA, die in Fig.1a eingezeichnet ist, gezeigt. Die optischen Elemente werden hier in einem Einschub 7 zusammengefasst, in welchem sie in einem festen Winkel relativ zur optischen Achse des Beobachtungsstrahlengangs angeordnet sind. Die optischen Elemente des Stapels in Fig.2 sind in einem Winkel von etwas weniger als 10° zur optischen Achse angeordnet, was nur beispielhaft zu verstehen ist. Der Einschub 7 kann gegen andere Einschübe ausgewechselt werden, die die optischen Elemente in anderen Winkeln fassen.

Bei den optischen Elementen handelt es sich um die Shearing-Elemente, hier zwei miteinander verkittete Keilprismen 8a und 8b, welche zusammen ein Nomarskiprisma bilden. Die anderen, außen liegenden Flächen der Keilprismen sind mit Polaren verkittet. An der Außenfläche des Keilprismas 8a ist dieses mit einem Polarisator 9a verkittet, an der Außenfläche des Keilprismas 8b ist dieses mit einem Analysator 9b verkittet. Im dargestellten Beispiel ist der Querschnitt des Schiebers gezeigt, wie er in einem Mikroskop zur inversen Beobachtung aufgenommen wird. Polarisator 9a und Analysator 9b können beispielsweise aus PVA-Folie hergestellt sein, jedoch ist auch die Verwendung anderer Materialen möglich. Die Durchlassrichtungen von Polarisator und Analysator stehen vorzugsweise gekreuzt zueinander im Winkel von 90°. Auf diese Weise wird maximaler Kontrast gewährleistet. Je nachdem, aus welchem Material die Polare bestehen, können sie - wie im vorliegenden Fall - noch mit Deckgläsern 10a und 10b verkittet sein, und zwar jeweils auf der dem jeweiligen Prisma abgewandten Seite. Anstelle alle oder auch nur einzelne optische Elemente miteinander zu verkitten ist es auch möglich, die Elemente einzeln einzufassen und in einen entsprechend dafür hergerichteten Einschub einzusetzen. Dies ermöglicht bei Bedarf den Austausch einzelner Elemente unabhängig von den anderen.

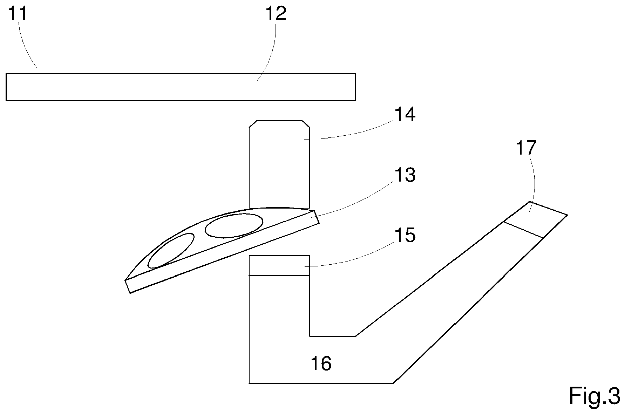

In Fig.3 schließlich ist der Aufbau eines inversen Mikroskops 11 skizziert, mit welchem der Schieber 1 verwendet werden kann. Das inverse Mikroskop 11 verfügt über einen Probentisch 12, oberhalb dessen sich eine nichtgezeigte Lichtquelle befindet. Unterhalb des Probentisches 12 ist ein Objektivrevolver 13 angeordnet, in den ein Objektiv 14 eingesetzt ist, welches außerdem in den Beobachtungsstrahlengang eingeschwenkt wurde. Unterhalb des Objektivrevolvers 13 befindet sich eine Schieberaufnahme 15, in die der Schieber 1 auswechselbar eingesetzt werden kann. Die Schieberaufnahme 15 ist also im Beobachtungsstrahlengang zwischen dem Objektivrevolver 13 und einem Okulartubus 16 starr angeordnet, am Ende des Okulartubus 16 befindet sich eine Okularhalterung 17 zur Aufnahme von Okularen.

Durch die Zusammenfassung der für das PlasDIC-Beobachtungsverfahren notwendigen optischen Elemente zu einem Stapel, in dem die einzelnen Elemente - abgesehen von der Spaltblende - fest zu einander angeordnet sind, wird es einem Benutzer ermöglicht, mit einer Handbewegung den gesamten Stapel aus den Strahlengang zu entfernen, wohingegen bisher mindestens zwei Handgriffe notwendig waren. Außerdem ist es möglich, eine Schieberaufnahme zu gestalten, die nicht an den Objektivrevolver gekoppelt ist, so dass der Stapel für mehrere Objektive genutzt werden kann. Der Stapel kann ausgewechselt werden, so dass eine Vielzahl von Objektiven mit dem gleichen Schieber benutzt werden kann. Bei teilmotorisierten und insbesondere bei manuell zu bedienenden Mikroskopen wird die Anzahl der notwendigen Schritte für einen Wechsel von PlasDIC-Verfahren zu einem anderen Beobachtungsverfahren somit deutlich reduziert. Aufgrund der geringen Anzahl der Komponenten gestaltet sich die Benutzung außerdem übersichtlicher und verringert zudem die Möglichkeit einer Fehlbedienung.

### Bezugszeichenliste

- 1: Schieber
- 2: erste Halterung
- 3: zweiter Halterung
- 4: dritte Halterung
- 5: Rändelschraube
- 6: Nut
- 7: Einschub
- 8a, 8b: Keilprisma
- 9a: Polarisator
- 9b: Analysator
- 10a, 10b: Deckglas
- 11: Mikroskop
- 12: Probentisch
- 13: Objektivrevolver
- 14: Objektiv
- 15: Schieberaufnahme
- 16: Okulartubus
- 17: Okularhalterung

## Patentansprüche

1. Schieber (1) zum Einschieben in den Beobachtungsstrahlengang eines Mikroskops (11), umfassend eine erste Halterung (2) und einen Stapel optischer Elemente,
- wobei in der ersten Halterung (2) der Stapel optischer Elemente für ein polarisationsoptisches, differentielles Interferenzkontrastverfahren als ein erstes Beobachtungsverfahren angeordnet ist, wobei der Stapel einen Polarisator (9a) und polarisationsoptische Shearing-Elemente umfasst, **dadurch gekennzeichnet, dass**
- der Stapel optischer Elemente in der ersten Halterung (2) einen Analysator (9b) umfasst, der im Stapel in Bezug auf seine Polarisationsrichtung in einer fest vorgegebenen Orientierung in Bezug auf die Polarisationsrichtung des Polarisators (9a) angeordnet ist,
- die erste Halterung (2) als Einschubhalterung ausgestaltet ist, und der Stapel optischer Elemente zu einem in die Einschubhalterung einzusetzenden Einschub (7) zusammengefasst ist, wodurch der Stapel optischer Elemente in der ersten Halterung (2) auswechselbar angeordnet ist,
- und der Schieber (1) mindestens eine weitere Halterung zur Aufnahme optischer Elemente für mindestens ein weiteres Beobachtungsverfahren umfasst.

2. Schieber (1) nach Anspruch 1, **dadurch gekennzeichnet, dass** die optischen Elemente des Stapels miteinander verkittet sind.

3. Schieber (1) nach Anspruch 1 oder 2, **dadurch gekennzeichnet, dass** der Einschub (7) mit einer Rändelschraube (5) zur lateralen Verschiebung des Stapels optischer Elemente im Einschub (7) ausgestaltet ist.

4. Schieber (1) nach einem der Ansprüche 1 bis 3, **dadurch gekennzeichnet, dass** die Shearing-Elemente zwei, bevorzugt miteinander verkittete, Keilprismen (8a, 8b) umfassen, welche bevorzugt ein Nomarskiprisma oder Wollastonprisma bilden.

5. Schieber nach einem der Ansprüche 1 bis 4, **dadurch gekennzeichnet, dass** Polarisator (9a) und Analysator (9b) aus Polyvinylalkohol-Folie bestehen.

6. Schieber (1) nach einem der Ansprüche 1 bis 5, **dadurch gekennzeichnet, dass** Polarisator (9a) und / oder Analysator (9b) mit den Shearing-Elementen verkittet sind, und/oder ihre den Shearing-Elementen abgewandten Seiten mit einem Deckglas (10a, 10b) verkittet sind.

7. Schieber (1) nach einem der Ansprüche 1 bis 6, **dadurch gekennzeichnet, dass** als weitere Halterungen eine zweite Halterung (3) und eine dritte Halterung (4) vorgesehen sind, und in der zweiten Halterung (3) optische Elemente für eine Hellfeld-Beobachtung, ein oder mehrere Filter oder kein optisches Element angeordnet sind.

8. Schieber (1) nach Anspruch 7, **dadurch gekennzeichnet, dass** in der dritten Halterung (4) ein Polarisator für eine Durchlicht-Beobachtung mit Polarisationskontrast oder für ein differentielles Interferenzkontrastverfahren angeordnet ist.

9. Mikroskop mit einem Schieber (1) nach einem der Ansprüche 1 bis 8, umfassend einen Objektivrevolver (13) und eine Schieberaufnahme (15), in die der Schieber (1) auswechselbar eingesetzt ist, wobei die Schieberaufnahme (15) im Beobachtungsstrahlengang zwischen dem Objektivrevolver (13) und einem Okulartubus (16) starr angeordnet ist.

## Claims

1. Slider (1) for sliding into the observation beam path of a microscope (11), comprising a first holder (2) and a stack of optical elements,
- wherein the stack of optical elements is arranged in the first holder (2) for the purposes of a polarization-optical, differential interference contrast method as a first observation method, wherein the stack comprises a polarizer (9a) and polarization-optical shearing elements, **characterized in that**
- the stack of optical elements in the first holder (2) comprises an analyser (9b) which, in respect of its polarization direction, is arranged in the stack with a fixedly specified orientation in relation to the polarization direction of the polarizer (9a),
- the first holder (2) is designed as an insertion piece holder and the stack of optical elements is combined to form an insertion piece (7) to be inserted into the insertion piece holder, as a result of which the stack of optical elements is interchangeably arranged in the first holder (2),
- and the slider (1) comprises at least one further holder for receiving optical elements for at least one further observation method.

2. Slider (1) according to Claim 1, **characterized in that** the optical elements of the stack are cemented to one another.

3. Slider (1) according to Claim 1 or 2, **characterized in that** the insertion piece (7) is designed with a knurled screw (5) for the lateral displacement of the stack of optical elements in the insertion piece (7).

4. Slider (1) according to any one of Claims 1 to 3,
**characterized in that** the shearing elements comprise two wedge prisms (8a, 8b), which are preferably cemented to one another and which preferably form a Nomarski prism or a Wollaston prism.

5. Slider according to any one of Claims 1 to 4,
**characterized in that** the polarizer (9a) and analyser (9b) consist of polyvinyl alcohol film.

6. Slider (1) according to any one of Claims 1 to 5,
**characterized in that** polarizer (9a) and/or analyser (9b) are cemented to the shearing elements and/or the sides thereof facing away from the shearing elements are cemented to a coverslip (10a, 10b).

7. Slider (1) according to any one of Claims 1 to 6,
**characterized in that** a second holder (3) and a third holder (4) are provided as further holders and optical elements for a bright field observation, one or more filters or no optical element are arranged in the second holder (3).

8. Slider (1) according to Claim 7, **characterized in that** a polarizer for a transmitted light observation with polarization contrast or for a differential interference contrast method is arranged in the third holder (4).

9. Microscope comprising a slider (1) according to any one of Claims 1 to 8, comprising an objective turret (13) and a slider receptacle (15), in which the slider (1) is inserted in interchangeable fashion, wherein the slider receptacle (15) is rigidly arranged in the observation beam path between the objective turret (13) and an eyepiece tube (16).

## Revendications

1. Platine coulissante (1) destinée à être insérée dans le trajet de faisceau d'observation d'un microscope (11) et comprenant un premier support (2) et un empilement d'éléments optiques,
- l'empilement d'éléments optiques étant disposé dans le premier support (2) à destination d'un procédé de contraste d'interférence différentiel optique de polarisation comme premier procédé d'observation, l'empilement comprenant un polariseur (9a) et des éléments de cisaillement optiques de polarisation, **caractérisée en ce que**
- l'empilement d'éléments optiques du premier support (2) comprend un analyseur (9b) qui est disposé dans une orientation prédéterminée fixe par rapport à la direction de polarisation du polariseur (9a) dans l'empilement par rapport à sa direction de polarisation,
- le premier support (2) est conçu comme un support d'insertion, et l'empilement d'éléments optiques est combiné de manière à former un insert (7) destiné à être inséré dans le support d'insertion, ce pour quoi l'empilement d'éléments optiques est disposé dans le premier support (2) de manière échangeable,
- et la platine coulissante (1) comprend au moins un autre support destiné à recevoir des éléments optiques à destination d'au moins un autre procédé d'observation.

2. Platine coulissante (1) selon la revendication 1,
**caractérisée en ce que** les éléments optiques de l'empilement sont cimentés entre eux.

3. Platine coulissante (1) selon la revendication 1 ou 2, **caractérisée en ce que** l'insert (7) est conçu avec une vis moletée (5) destinée à faire coulisser latéralement l'empilement d'éléments optiques dans l'insert (7).

4. Platine coulissante (1) selon l'une des revendications 1 à 3, **caractérisée en ce que** les éléments de cisaillement comprennent deux prismes en coin (8a, 8b), de préférence cimentés entre eux, qui forment de préférence un prisme Nomarski ou Wollaston.

5. Platine coulissante selon l'une des revendications 1 à 4, **caractérisée en ce que** le polariseur (9a) et l'analyseur (9b) comprennent un film d'alcool polyvinylique.

6. Platine coulissante (1) selon l'une des revendications 1 à 5, **caractérisée en ce que** le polariseur (9a) et/ou l'analyseur (9b) sont cimentés avec les éléments de cisaillement et/ou leurs côtés opposés aux éléments de cisaillement sont cimentés avec un verre de revêtement (10a, 10b).

7. Platine coulissante (1) selon l'une des revendications 1 à 6, **caractérisée en ce qu'**un deuxième support (3) et un troisième support (4) sont prévus comme autres supports, et le deuxième support (3) comporte des éléments optiques d'observation en champ clair, un ou plusieurs filtres ou ne comporte aucun élément optique.

8. Platine coulissante (1) selon la revendication 7,
**caractérisée en ce qu'**un polariseur est prévu dans le troisième support (4) pour l'observation en lumière transmise avec contraste de polarisation ou pour un procédé de contraste d'interférence différentiel.

9. Microscope à platine coulissante (1) selon l'une des revendications 1 à 8, comprenant une tourelle d'objectif (13) et un réceptacle de platine coulissante (15) dans lequel la platine coulissante (1) est insérée de manière remplaçable, le réceptacle de platine coulissante (15) étant disposé de manière rigide dans le trajet de faisceau d'observation entre la tourelle d'objectif (13) et un tube d'oculaire (16).
